(19) **Europäisches Patentamt / European Patent Office / Office européen des brevets**

(11) **EP 1 162 752 B1**

(12) **EUROPEAN PATENT SPECIFICATION**

(45) Date of publication and mention
of the grant of the patent:
**21.02.2007 Bulletin 2007/08**

(51) Int Cl.:
*H04B 1/16* (2006.01)   *H04Q 7/32* (2006.01)

(21) Application number: **00401642.4**

(22) Date of filing: **09.06.2000**

(54) **Time synchronisation for mobile systems.**

Zeitsynchronisierung für Mobile Funksysteme

synchronisation temporelle pour systemes mobiles

(84) Designated Contracting States:
**AT BE CH CY DE DK ES FI FR GB GR IE IT LI LU MC NL PT SE**
Designated Extension States:
**AL LT LV MK RO SI**

(43) Date of publication of application:
**12.12.2001 Bulletin 2001/50**

(73) Proprietor: **MOTOROLA, INC.**
**Schaumburg, IL 60196 (US)**

(72) Inventors:
 • **Abdesselem, Ouelid**
 **31000 Toulouse (FR)**

 • **Bussan, Christopher**
 **Crystal Lake,**
 **Illinois 60012 (US)**
 • **Brandt, Steven**
 **Darien,**
 **Wisconsin 53114 (US)**

(74) Representative: **Cross, Rupert Edward Blount et al**
**Boult Wade Tennant**
**Verulam Gardens**
**70 Gray's Inn Road**
**London WC1X 8BT (GB)**

(56) References cited:
**EP-A- 0 586 256**   **WO-A-00/33594**
**US-A- 6 016 312**

## Description

Background of the Invention

This invention relates to time synchronisation for mobile systems. In particular, but not exclusively, it relates to a method for synchronising a mobile terminal such as a mobile telephone, particularly a GSM telephone, with a network and maintaining this synchronisation when the mobile terminal is in a deep sleep mode.

A GSM terminal typically has two clock sources. These are a high speed clock source at 13MHz, and a 32KHz crystal. The high speed 13MHz clock source is used during normal use of the terminal and also when the terminal is in communication with a base station. The lowest current drain state the terminal can enter (other than being powered off) is known as deep sleep. In deep sleep, the terminal can conserve power by turning off its hardware block of components and also by turning off the crystal that generates the high speed 13MHz clock (CLK_ REF) and by not driving any devices that use the CLK_ REF. When deep sleep state is entered, power is removed from the CLK_ REF source. The low speed clock (CLK_ 32KHz) is used to keep track of time during the period that CLK_ REF is shut down.

The software in a GSM type system is layer based. The bottom layer, layer 1, relates to initial signal processing, and mapping on signal channels, etc. The use of CLK_ 32KHz allows layer 1 of the GSM type system to maintain synchronisation with a network. It also allows a timer to be set up to bring the phone out of deep sleep for layer 1 events and other events. This timer keeps track of time while in deep sleep mode using CLK_ 32KHz. It is therefore important that CLK_32KHz be kept in synchronisation.

Before entering deep sleep, a measurement is done to establish the frequency relationship between CLK_ 32KHz and CLK_ REF. This allows time kept by CLK_ 32KHz to be converted into CLK_ REF time so that the phone can stay synchronised to the network. This measurement has to be done since the relationship between CLK_ 32KHz and CLK_ REF is constantly changing due to say crystal drift, jitter and ramping of CLK_ 32KHz. CLK_ REF is a reference frequency; its frequency is intermittently adjusted to match the frequency of network transmissions and therefore CLK_ REF remains essentially stable.

One problem with the measurement method is the duration of time that the measurement must be performed over to get an accurate relationship between the two clocks, that is, the time of the 32KHz clock which is required to obtain a number of periods of the CLK_ REF. The amount of time required for the measurement to get an accurate relationship between the clocks is much greater than the actual time the system needs to be awake to read paging blocks, for example, from the network. At least a 500 ms measurement duration (often typically around 800 ms) is required to obtain the necessary accuracy to wake up and read a paging block. However, spending 500 ms taking a measurement would generally consume too much current.

In a present method of working around this problem, in addition to reading the paging block, another Signallying Channel (SCH) burst is read first, which can tolerate more timing error. SCH is a specialised signalling channel, the functioning of which is well known to those skilled in the art. The use of this technique allows the measurement time to be reduced to about 40 milliseconds. However, the necessity of waking up early to read the SCH burst and the power consumed reading the burst also adversely affects overall current drain.

PCT patent application no. WO 00/33594 discloses a wireless telephone that rapidly reacquires a time reference using pilot signals from a wireless network after a sleep mode. Only a slow but power efficient clock source and a counter is active during sleep mode. At the end of the sleep mode, the slow clock generates a wake-up interrupt and the telephone's master timer and fast clock source are restarted. The telephone then reacquires pilot signals using predictions of parameters of the pilot signals previously calculated and stored in the telephone prior to entering the sleep mode. A time correction factor can then be computed that closely aligns the received pilot signals on the prediction which is then weighted and the master timer is adjusted by the weighted time correction.

The present invention arose in an attempt to provide an improved time synchronisation method with reduced power consumption.

Summary of the Invention

According to the present invention in a first aspect there is provided a method of maintaining time synchronisation of a mobile terminal, of a telecommunications system, as recited in claim 1 of the acompanying claim:

Preferably, the method includes making an initial measurement to establish a frequency relationship between the high speed and low speed clocks, prior to entering deep sleep mode.

Preferably, the method includes attributing a portion of the correlation peak offset to the frequency drift of the low speed clock, averaging this to the time drift offset, and deriving a correction value to correct full frequency drift.

The initial measurement can be over a relatively long period to establish a correlation between the high speed and low speed clocks.

Alternatively, an initial measurement may be made by the low speed clock, independently of the high speed clock, by measuring time of arrival of sychronisation channel bursts (eg SCH bursts in GSM system), by the remote station.

In embodiments of the present invention, an initial, long, measurement is taken to establish a frequency correlation between the mobile terminal's high speed and low speed clocks. This correlation is updated based on the time of arrival of network bursts (ie paging blocks), related to the clock of the base station or other external terminal. The timing difference between bursts received before sleeping and after sleeping is used to update the high speed to low speed clock frequency correlation. The update is preferably achieved by instantaneously averaging a fraction of the timing difference into the frequency correlation.

Accordingly, using methods according to the present invention, network timing is used to determine the drift of a mobile terminal's low speed clock while the mobile terminal was in a sleep mode during a paging block period.

Preferably, if a terminal wakes up and is then unable to decode a paging block for any reason, it falls back to reading the signal channel SCH. If it can decode the SCH, then cell timing can be updated and the next attempt at reading the paging block is more likely to be successful.

Advantageously, if the SCH cannot be decoded, then the mobile terminal continues trying to read subsequent SCH and paging blocks. If paging block decode errors become too numerous, then it is considered that the mobile terminal has lost use of a cell, and the process of acquiring a cell begins again. The process of acquiring cells and channels is well known. Before entering deep sleep mode in a newly acquired cell, a method according to the present invention will begin again from the start by taking a new long measurement.

The present invention further provides a mobile terminal, of a telecommunications network, as recited in claim 17 of the accompanying claims.

Brief Description of the Drawings

Embodiments of the invention will now be described, by way of example only, with reference to the accompanying drawings in which:

Figure 1 shows a mobile terminal in radio communication with a base station;
Figure 2 shows clock pulses from a low speed clock and a high speed clock within a mobile terminal;
Figure 3 shows a series of paging bursts; and
Figure 4 shows a scenario of paging bursts.

Detailed Description of Preferred Embodiments

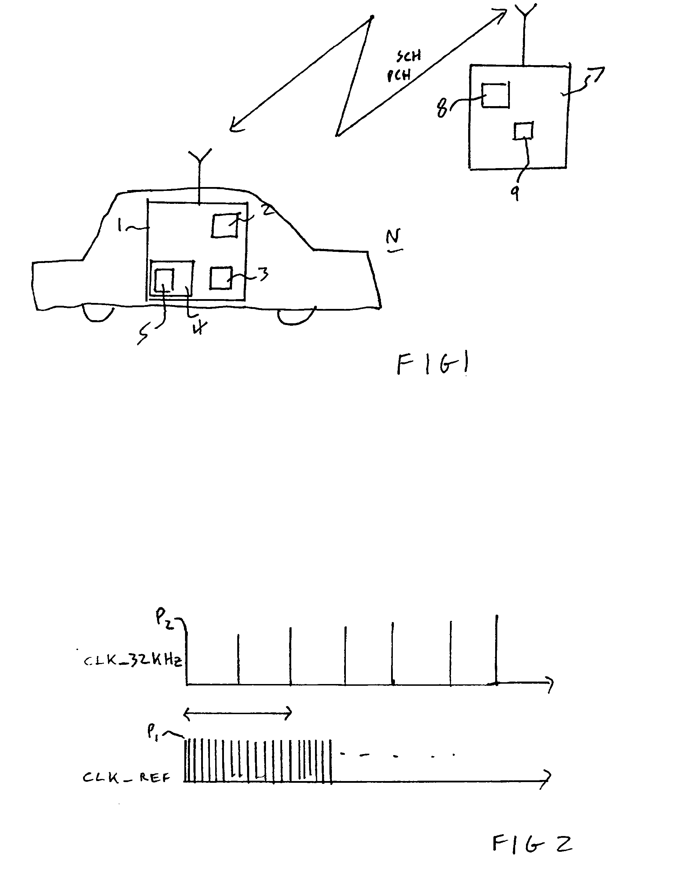

Referring to Figure 1, a telecommunications Network N comprises a plurality of mobile terminals (e.g. cellular phones), of which one is shown at 1. The mobile terminal includes processing circuitry 2 and a high speed clock, CLK_ REF 3 which operates at 13 MHz. The terminal also includes a deep sleep module 4 which incorporates a low speed clock 5, CLK_32 KHz

In a cellular system, a base station 7 lies at the heart of each cell and communicates with each mobile terminal in known manner so that data can be transmitted and received by the mobile terminal in a known manner. This can be voice communication, data communication, video communication, signalling information or any other transmission etc. The base station includes processing means 8 and a clock 9. When the mobile terminal 1 is in active communication with the base station 7, then the high speed clock 3 is used for timing purposes and this is locked to the network (or at least the base station from which the terminal receives data. The base station transmits many types of signals, including synchronisation channels SCH, paging channels PCH, and others.

In GSM, PCH is a paging channel sent by the base station at predetermined time slots in order to initiate a mobile - terminal call or data transfer. SCH is a Synchronisation CHannel broadcast by the Base Station allowing initial accurate sychronization of the Mobile Stations on the corresponding cell. It contains the frame number and multiframe number for that particular cell. The SCH burst includes a wider midamble (64 bits) than a normal burst e.g. PCH burst (26 bits), allowing the Mobile Station to catch the burst even if it was not fully sychronized (typically a Mobile station catches an SCH burst shifted by up to +/-20bits, while it can catch up a normal burst shifted only by +/-5bits). So SCH has been defined by GSM standard bodies for initial synchronization on serving cell and neighbouring cells.

SCH and PCH are specific to GSM, and perhaps other systems, but most wireless communication systems utilise similar concepts of paging channels and syncronization channels. The present invention is applicable also to these.

The lowest current drain state a terminal can enter (other than being powered off) is known as deep sleep. While in deep sleep mode, a GSM phone switches off the high speed clock source and uses the low speed clock source CLK_32 KHz 5 in order to greatly reduce power consumption. The 32 KHz crystal is free running and is not locked to the system that the phone receives data from. Use of CLK_32 KHz allows layer 1 to maintain synchronisation with the network. It also allows the timer to be set up to bring the phone out of deep sleep for layer 1 events and EXEC events.

Before entering deep sleep mode, an initial measurement is done to establish a frequency relationship between CLK_32 KHz and CLK_REF. As shown in Figure 2, this may comprise measuring the number of cycles P1 of the 13 MHz clock in a predetermined number of cycles P2 of the 32 KHz clock. The diagram is schematic. In practice, there will be many more cycles of CLK_REF in each cycle of CLK_32 KHz than shown. The time required for this, to get enough accuracy, will depend upon circumstances and technology. It will generally take at least 500 ms. This is dependent upon, for example, jitter, ramp up/ramp down sharpness, sensitivity to temperature drifts and other considerations.

In prior art methods, the 13 MHz crystal is adjusted by means of the received signal. This is done by frequency or phase rotation comparisons between the expected received bursts and actual received bursts. The drift of the 32 KHz clock is then measured by computing a period ratio between the two clocks in the mobile terminal, using some hardware logic.

In the present invention, an initial measurement is taken, as described in relation to Figure 2, for establishing an initial frequency relationship between CLK_32 KHz and CLK_REF. This provides a seed for a time drift offset. The mobile telephone 1 then enters a deep sleep mode which will be termed 'idle' mode. When the phone wakes up, paging bursts (PCH) are read from the base station 7. This enables a timing correlation peak offset to be computed between the base station and the mobile terminal. This may be done by measuring the time of arrival of the paging blocks (otherwise known as network bursts). The timing difference between bursts received before sleeping and after sleeping is then used to update the CLK_REF to CLK_ 32 KHz frequency correlation. This update is preferably done by instantaneously averaging a fraction of the timing difference into the frequency correlation. Accordingly, timing derived from the network (or base station) itself is used to determine the drift of CLK_32 KHz while the terminal sleeps during a paging block period.

Features of the invention will now be described in more detail.

In embodiments of the present invention, the drift of the low speed clock of the mobile terminal is measured based upon the high speed clock (13 MHz clock) 9 of the base station, by means of time of arrival of PCH blocks, after the mobile terminal's low speed clock had already been accurately tuned by initial measurements.

After the mobile terminal has performed an initial measurement to obtain drift of the 32 KHz against its internal 13 MHz clock (e.g. during a time period of about 500 to 800 ms, typically 600 ms), then the terminal enters an idle mode. In this mode, the mobile terminal runs its low speed clock during DRX periods and its high speed clock during active periods only. The drift of the low speed clock is measured using the time of arrival of the signalling blocks (paging blocks) from the base station.

In GSM, DRX is Discontinuous Reception Mode. The DRX period is well known in GSM and other telephone systems and one DRX period is a multiframe, which is typically 235 ms. A paging block (PCH) is typically of around 20 ms. The DRX_period is equal to the number of multiframes between paging blocks. So DRX2 = 2 x multiframes, DRX9 = 9 multiframes, etc.

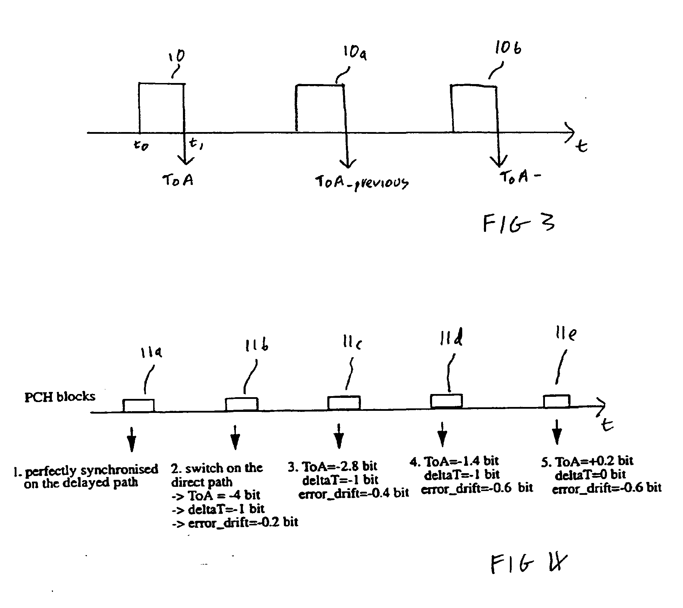

Referring now to Figure 3, there are shown (schematically) bursts of a PCH block from a base station. In fact, each block 10 shows the average of four block bursts. Conventionally in GSM systems, four bursts are sent in a paging block. If the average time when a PCH block is transmitted is To then the average time at which the full bursts are received (time of arrival - To A is $T_1$). Blocks 10a and 10b show subsequent blocks of four bursts. These will then be continued. The average time of arrival of each of the bursts is determined by using the 32 KHz clock since the system is now in the locked mode.

If synchronisation is perfect, then the ToA value would be kept to 0. However, the ToA may vary due to many reasons, including

- variation in the multipath profile from one block to another
- error of estimation in the processor
- drift of the 32 KHz clock or mobility of the mobile terminal.

By averaging the ToA's, then the last effect (drift of the 32 KHz clock or mobility of the mobile terminal) becomes predominant. Hence, it is preferred (but not essential) to average a plurality of bursts. The average time of arrival of each of the groups of four bursts (e.g. group 10b) is compared with the average time of arrival of the last group of four bursts (e.g. group 10a). Thus, ToA_Current is compared with ToA_Previous in the Figure.

A suitable formula is then used to correct the drift of the 32 KHz clock. This formula may take many forms, as will be apparent to the skilled reader. One (non-limiting) example is described below.

When the next group of bursts is received, their time of arrival is compared with the time of arrival of the previous group and the drift can then again be corrected. This continues whilst the mobile terminal is in idle mode.

One formula for correcting the drift of the 32 KHz clock is:

$$\text{Drift\_32} = 1/\text{alpha} * \text{deltaT}/\text{T\_32} \quad (\text{deltaT and T\_32 are both in quarter bit}).$$

With alpha = 5*(DRX_period/2 seconds)

T_32 is the time spent by the 32 KHz clock between the subsequent ToA's.

DeltaT is equal to ToA but clipped inside a range of quarter bits of typically -4 to +4. DeltaT is also used to correct the layer 1 timer counters.

If T_32 is less than the DRX_period/2, then the measurement is discarded.

So, for DRX 9, alpha = 5 and for DRX2, alpha = 22.

The coefficient alpha is used to take into account only part (i.e. a fraction) of the timing difference into the frequency correlation.

Knowing that the drift_coefficient is the fractional ratio which provides the number of 13 MHz periods for a given number of 32 KHz periods, then,

$$\text{drift\_ coefficient} = \text{drift\_coefficient} \times (1 - \text{drift\_32})$$

The deep sleep mode can now be handed with an updated drift coefficient and the drift of the 32 KHz clock is substantially allowed for.

With previous techniques, extra SCH bursts had to be added. These unnecessary SCH bursts can now be removed. As soon as the SCH is removed, whatever the accuracy of the 32 KHz clock, there is a much higher constraint on the total timing error (including multipath, mobility, clock drifts, clipping and rounding errors, and hardware uncertainties); the received signal generally needs to be kept in-between [-5, +5] bits between two paging blocks.

The time checking algorithm has to keep synchronisation by means of paging blocks. This means that firstly the time adjustment is done after each serving cell signalling block (clipping of +/- 1 bit) and secondly the signal from the base station is kept in the range [-5, +5] bits.

Whatever the algorithm chosen to estimate the 32 KHz, and it must be remembered that the algorithm described above is only one of several which can be used, then errors (in bits) may appear due to;

[-4, +4] in case of severe multipath profiles (e.g. hilly terrain)

[-0.6, +0.6] for clock drift and mobility

[-0.3, +0.3] for rounding errors

[-0.3, +0.3] as a provision for jitter in hardware when switching from/to the 32 KHz clock.

It is found that some eleven correlations are being performed by the signal processor of the mobile terminal. This is therefore capable of acquiring the [+4, -4] bit switches described above, with an additional one bit margin on each side. This is much less than from an SCH burst, so it is important to have an accurate algorithm to estimate the ToA values.

It is firstly important to define the burst position in a signalling block, the time of arrival of which is measured. After having performed correlations, the position of the maximum correlation peak is obtained. In one embodiment of the invention, the middle of the energy window is defined as being the position of the burst in a signalling block. In other embodiments, a different measurement may be made. However, by using the middle of the energy window, as soon as more than one path is detected (e.g. direct and delayed paths) then the mobile terminal can synchronise in-between them. This leads to a more stable time base. It also reduces rounding error, typically from +/- 0.5 to +/- 0.3 bits.

An additional feature is the choice of averaging a plurality of individual ToA's to get the overall ToA of a signalling block. As described, in a preferred embodiment, four individual ToA's are averaged. However, more or less than these may be averaged. Such averaging is better in fast fading cases than the time tracking by means of one SCH burst. The averaging computation can then still be enhanced compared to current methods by taking into account signal to noise ratio or any other quality indicator for each individual burst. In one example

$$\text{ToA} = \text{sum (SNRi*ToAi)/sum[SNRi] for i} = 1,4$$

The ToA values may first be clipped (deltaT) before applying time correction (by +/- one bit instead of +/- 0.5 bits for SCH in current layer 1), ensuring smooth update of the mobile terminal's time base.

The deltaT values may be further filtered before being considered for the 32 KHz drift estimation, ensuring smooth update of the 32 KHz drift coefficient (limited to less than one quarter bit per block of current).

If a mobile terminal is unable to decode a paging block, or if there is Downlink Signalling Failure, then it can revert to trying to read subsequent SCH blocks. This may happen, for example, with extreme multipath cases if the blocks go beyond the normal window in which they are expected, or with extreme temperature variations which may lead the 32 KHz clock to drift too quickly. For DRX9, this drift would have to be greater than 0.2 ppm per second.

The definition of Downlink Signalling Failure is specified by GSM.

If the SCH decodes on such an attempt, then the cell timing can be updated and the next attempt at reading the paging block is more likely to be successful. Alternatively, if the SCH does not decode, then the mobile terminal continues trying to read SCH and paging blocks. If paging block decode errors become too numerous, then the cell is considered to be lost and the process of acquiring a cell has to begin again. Before entering deep sleep mode on a newly acquired cell, the process has to begin from the start by taking a new long measurement to determine the relationship between CLK_REF and CLK_32 KHz.

In one embodiment, +/- 0.6 bits are allowed for drift inaccuracy estimation and mobility errors of the 32 KHz clock. The algorithm which is used to estimate the drift from the ToA's should preferably keep these errors in the range +/- 0.6 bits.

One problem arises with mobility of a mobile terminal. If a terminal is moving away from or towards the base station, then there will be some effect on clock frequency and of course the doppler effect comes into play. At a radial speed of 250 km per hour, which is +/- 0.15 quarter bits each two seconds, then the mobility will appear as a 32 KHz drift. This will then be automatically corrected in embodiments of the invention.

The following Table 1 indicates tuning of the averaging parameter for a worst case of DRX9.

**TABLE 1**

| alpha | Maximum crystal drift that can be corrected | Accuracy of the 32 KHz estimation |
|---|---|---|
| 3 | +/- 18 ppm per minute | +/- 1 bit |
| 5 | +/- 12 ppm per minute | +/- 0.6 bit |
| 10 | +/- 6 ppm per minute | +/- 0.3 bit |
| (alpha = 10, DRX4) | (+/- 25 ppm per minute) | (+/- 0.3 bit) |

The maximum crystal drift than can be corrected is deducted from (1/alpha)*(deltaT=3.69us) / (T_32 = 2s). That value is multiplied by (60s / T_32 = 2s) to provided the drift per minute. If the temperature variations are sometimes higher than these, then a recovery mechanism using SCH decoding can be attempted.

Concerning the accuracy of the 32 KHz estimation, a worst case has been considered, i.e.
hilly terrain profile, with delayed paths of-4 bits,
2 extreme scenarios; scenario 1 for which the mobile terminal was synchronised on the direct path and suddenly switches to the delayed path, and scenario 2 for which the contrary occurs.

Figure 4 shows schematically a scenario in which, between blocks 11a and 11b, the terminal switches between the delayed path and the direct path. The Figure shows that if the mobile terminal is able to correctly receive block $11_b$ (ToA of-4 bits) then it recovers the time base three blocks later and the error on the 32 KHz clock drift estimation is kept at a low value (-0.6 bit). That error drift comes back quickly to 0 (for example -0.4 bit on the 7th block, -0.2 bits on the 9th block and so on).

In embodiments of the invention, an initial measurement is taken for the drift of the 32 KHz clock against the mobile terminal's 13 MHz clock. Various methods may be used for these. In one method, by means of a hardware deep sleep module, an initial measurement of approximately one second can be made, which is sufficient to obtain two quarter bits accuracy.

In a second alternative, a set of a plurality of SCH's (in one embodiment ten) may be used to average the estimated initial 32 KHz drift.

The choice of these or other methods may depend upon power consumption and other considerations which will be apparent to the skilled reader. The first option is likely to consume approximately 30 mW incurrent GSM radios, assuming that the layer 1 timer is not running. Otherwise, it will be approximately 50 mW. The second option is likely to involve a power consumption of approximately 10 x 2 mW = 20 mW.

However, option 1 may be optimised so that the time taken is 500 ms instead of 1 second, running the measurements while in a select mode (and thus the two methods may be quite close in terms of power consumption).

In embodiments of the invention, unnecessary FCH and SCH windows are removed. It has been estimated that standby time improvements of up to 28% or more, compared to presently available designs, may be achieved.

In the embodiments described above, CLK_32KHz is initially synchronised with CLK_ref by measuring the number of cycles of CLK_ref in a predetermined number of cycles of CLK_32KHz. Alternatively, the two clocks may be completely independent. This may be achieved by initially using CLK_32KHz to measure ToA's of SCH bursts. This then initially synchronises CLK_32KHz before Deep Sleep Mode. The 32 KHz clock should be sufficiently accurate to catch the SCH bursts (I30ppm).

**Claims**

1. A method of maintaining time synchronisation of a mobile terminal (1), of a telecommunications network (N), said mobile terminal having a low speed clock (5) and a high speed clock (3); wherein the low speed clock is at least partly maintained in synchronisation with a clock (9) of a remote station (7) by utilising signal bursts received from said remote station (7), the method being **characterised by** using the time of arrival of paging blocks PCH to measure timing correlation peak offsets between a network high speed clock (9) and the low speed clock (5) of the mobile terminal, and wherein the correlation peak offset values are used to correct the frequency drift of the low speed clock.

2. A method as claimed in claim 1, comprising; making an initial measurement to establish initial synchronisation between the low speed clock (5) and the network (N), entering a deep sleep mode and using the time of arrival of paging blocks PCH from a remote station (7) in the network, measured by the low speed clock (5), to correct frequency drift of the low speed clock.

3. A method as claimed in claim 1, comprising; making an initial measurement to establish a frequency relationship between the high speed (3) and low speed (5) clocks of the mobile terminal, entering a deep sleep mode and updating said relationship based upon the time of arrival of paging blocks PCH from a remote station (7) in the network, measured by the low speed clock (5), to correct frequency drift of the low speed clock.

4. A method as claimed in claim 3 wherein the initial measurement comprises measuring the number of cycles of the high speed clock (3) of the mobile terminal in a predetermined number of cycles of the low speed clock (5).

5. A method as claim in any preceding claim, wherein a portion of the correlation peak offset is attributed to the frequency drift of the low speed clock (5), the method further comprising averaging this portion to a time drift offset, and deriving a correction value to correct full frequency drifts.

6. A method as claimed in claim 1, 2, 3, or 4, comprising using timing differences between network bursts to update the correlation between the low speed and high speed clocks of the terminal, by instantaneously averaging a fraction of the timing difference into the frequency correlation.

7. A method as claimed in any preceding claim, wherein an initial measurement is done over a period of at least 500 ms, to establish initial synchronisation of the low speed clock.

8. A method as claimed in any preceding claim, wherein, in a mobile telephone system, if a mobile terminal (1) is unable to decode a paging block PCH for timing correlation, it utilises a secondary recover mechanism.

9. A method as claimed in any preceding claim, wherein, in a mobile telephone system, if Downlink signal failure is detected, a secondary recovery mechanism is used.

10. A method as claimed in claim 8 or claim 9, wherein the recovery mechanism comprises reading an SCH and, if the terminal (1) is able to decode the SCH, updating the timing of the low speed clock (5).

11. A method as claimed in Claim 10, wherein if the SCH is not able to be decoded, the mobile telephone (1) instigates a process for reacquiring a cell and initiates a further initial measurement to establish a relationship between its high speed (3) and low speed (5) clocks.

12. A method as claimed in any of claims 1 to 11, wherein the overall time of arrival of a paging block is derived by averaging a plurality of individual time of arrivals.

13. A method as claimed in claim 12, wherein an average is taken of four bursts.

14. A method as claimed in any of claims 1 to 13, wherein the time of arrival values are clipped before applying a time correction to them.

15. A method as claimed in any preceding claim, wherein the terminal (1) is a mobile terminal of a cellular system, the low speed clock (5) has a nominal rate of 32KHz and the high speed clock (3) has a nominal rate of 13 MHz.

**16.** A mobile terminal (1), for use in a telecommunications network (N), the terminal (1) comprising a high speed clock (3) and a low speed clock (5), and means (2) for maintaining the low speed clock in synchronisation by measuring and utilising signal bursts received from an external station, the mobile terminal being **characterised in that** the means for maintaining is arranged to use in operation the time of arrival of paging blocks PCH to measure timing correlation peak offsets between a network high speed clock (9) and the low speed clock (5) of the mobile terminal, and wherein the correlation peak offset values are used to correct the frequency drift of the low speed clock.

**Patentansprüche**

**1.** Verfahren zur Aufrechterhaltung einer Zeitsynchronisation eines mobilen Endgeräts (1) eines Telekommunikationsnetzwerks (N), wobei das mobile Endgerät einen langsamen Taktgeber (5) sowie einen schnellen Taktgeber (3) aufweist; **dadurch gekennzeichnet, dass** der langsame Taktgeber zumindest teilweise in Synchronisation mit einem Taktgeber (9) einer entfernten Station (7) gehalten wird, indem von der entfernt angeordneten Station (7) empfangene Signalbursts verwendet werden, wobei das Verfahren durch die folgenden Schritte **gekennzeichnet** ist: Verwenden der Ankunftszeit von Funkruf- oder Paging-Blöcken PCH zur Messung von Korrelations-Spitzenabweichungen der zeitlichen Abstimmung zwischen dem schnellen Taktgeber (9) eines Netzwerks und dem langsamen Taktgeber (5) des mobilen Endgeräts, und wobei die Korrelations-Spitzenabweichungswerte zur Korrektur der Frequenzdrift des langsamen Taktgebers verwendet werden.

**2.** Verfahren nach Anspruch 1, welches die folgenden Schritte aufweist: Durchführen einer anfänglichen Messung zur Herstellung einer anfänglichen Synchronisation zwischen dem langsamen Taktgeber (5) und dem Netzwerk (N), Gelangen in einen Deep-Sleep-Mode oder Tiefschlafmodus und Verwenden der Ankunftszeit von Funkruf- oder Paging-Blöcken PCH von einer entfernten Station (7) in dem Netzwerk, welche von dem langsamen Taktgeber (5) gemessen wird, zur Korrektur einer Frequenzdrift des langsamen Taktgebers.

**3.** Verfahren nach Anspruch 1, welches weiter die folgenden Schritte aufweist: Durchführen einer anfänglichen Messung zur Herstellung einer Frequenzbeziehung zwischen dem schnellen Taktgeber (3) und dem langsamen Taktgeber (5) des mobilen Endgeräts, Gelangen in einen Deep-Sleep-Mode oder Tiefschlafmodus und Aktualisieren der Beziehung basierend auf der Ankunftszeit von Funkruf- oder Paging-Blöcken PCH von einer entfernten Station (7) in dem Netzwerk, welche mit Hilfe des langsamen Taktgebers (5) gemessen wird, zur Korrektur der Frequenzdrift des langsamen Taktgebers.

**4.** Verfahren nach Anspruch 3, **dadurch gekennzeichnet, dass** die anfängliche Messung die Messung der Anzahl von Taktzyklen des schnellen Taktgebers (3) des mobilen Endgeräts in einer vorher festgelegten Anzahl von Taktzyklen des langsamen Taktgebers (5) aufweist.

**5.** Verfahren nach einem der vorhergehenden Ansprüche, **dadurch gekennzeichnet, dass** ein Anteil der Korrelations-Spitzenabweichung der Frequenzdrift des langsamen Taktgebers (5) zugeschrieben wird, wobei das Verfahren des Weiteren die Durchschnittswertermittlung dieses Anteils bezüglich einer Zeitdrift-Abweichung sowie die Ableitung eines Korrekturwerts zur Korrektur vollständiger Frequenzdriften aufweist.

**6.** Verfahren nach einem der Ansprüche 1, 2, 3 oder 4, welches weiter die Verwendung von Differenzen der zeitlichen Abstimmung zwischen Netzwerkbursts zur Aktualisierung der Korrelation zwischen dem langsamen Taktgeber und dem schnellen Taktgeber des Endgeräts aufweist, indem unverzüglich ein Durchschnittswert eines Bruchteils der Differenz der zeitlichen Abstimmung in der Frequenzkorrelation ermittelt wird.

**7.** Verfahren nach einem der vorhergehenden Ansprüche, **dadurch gekennzeichnet, dass** eine anfängliche Messung über eine Zeitdauer von mindestens 500 ms erfolgt, um eine anfängliche Synchronisation des langsamen Taktgebers herzustellen.

**8.** Verfahren nach einem der vorhergehenden Ansprüche, **dadurch gekennzeichnet, dass** in einem mobilen Telefonsystem, falls ein mobiles Endgerät (1) nicht in der Lage ist, einen Funkruf- oder Paging-Block PCH für eine Korrelation der zeitlichen Abstimmung zu decodieren, es einen sekundären Wiederherstellungsmechanismus einsetzt.

**9.** Verfahren nach einem der vorhergehenden Ansprüche, **dadurch gekennzeichnet, dass** in einem mobilen Telefonsystem, falls ein Downlink-Signalausfall erfasst wird, ein sekundärer Wiederherstellungsmechanismus eingesetzt wird.

**10.** Verfahren nach Anspruch 8 oder 9, **dadurch gekennzeichnet, dass** der Wiederherstellungsmechanismus das Lesen eines Synchronisations-Kanalbursts SCH aufweist, und falls das Endgerät (1) in der Lage ist, das SCH zu decodieren, weiter das Aktualisieren der zeitlichen Abstimmung des langsamen Taktgebers (5).

**11.** Verfahren nach Anspruch 10, **dadurch gekennzeichnet, dass** falls eine Decodierung des SCH nicht möglich ist, das mobile Endgerät oder Mobiltelefon (1) einen Prozess zur Wiedergewinnung einer Zelle antreibt und eine weitere anfängliche Messung zur Herstellung einer Beziehung zwischen seinem schnellen Taktgeber (3) und seinem langsamen Taktgeber (5) einleitet.

**12.** Verfahren nach einem der Ansprüche 1 bis 11, **dadurch gekennzeichnet, dass** die Gesamtankunftszeit eines Funkruf- oder Paging-Blocks abgeleitet wird, indem ein Durchschnittswert aus einer Vielzahl individueller Ankunftszeiten gebildet wird.

**13.** Verfahren nach Anspruch 12, **dadurch gekennzeichnet, dass** ein Durchschnittswert aus vier Bursts ermittelt wird.

**14.** Verfahren nach einem der Ansprüche 1 bis 13, **dadurch gekennzeichnet, dass** die Ankunftszeitwerte beschnitten werden, bevor sie einer Zeitkorrektur unterzogen werden.

**15.** Verfahren nach einem der vorhergehenden Ansprüche, **dadurch gekennzeichnet, dass** das Endgerät (1) ein mobiles Endgerät eines Zellularsystems ist, der langsame Taktgeber (5) eine Nennrate von 32 KHz und der schnelle Taktgeber (3) eine Nennrate von 13 MHz aufweist.

**16.** Mobiles Endgerät (1) zur Verwendung in einem Telekommunikationsnetzwerk (N), wobei das Endgerät (1) Folgendes aufweist: einen schnellen Taktgeber (3) und einen langsamen Taktgeber (5), sowie eine Vorrichtung (2) zur Aufrechterhaltung der Synchronisation des langsamen Taktgebers, indem von einer externen Station empfangene Signalsbursts gemessen und eingesetzt werden, wobei das mobile Endgerät **dadurch gekennzeichnet ist, dass** die Aufrechterhaltungsvorrichtung derart angeordnet ist, dass sie während ihres Betriebs die Ankunftszeit von Funkruf- oder Paging-Blöcken PCH zur Messung von Korrelationsspitzenabweichungen der zeitlichen Abstimmung zwischen dem schnellen Taktgeber (9) eines Netzwerks und dem langsamen Taktgeber (5) des mobilen Endgeräts verwendet, und dass die Korrelations-Spitzenabweichungswerte zur Korrektur der Frequenzdrift des langsamen Taktgebers verwendet werden.

**Revendications**

**1.** Procédé de maintien de la synchronisation temporelle d'un terminal mobile (1), d'un réseau de télécommunication (N), ledit terminal mobile présentant une horloge basse vitesse (5) et une horloge haute vitesse (3); dans lequel l'horloge basse vitesse est au moins en partie maintenue synchronisée avec une horloge (9) d'une station distante (7) au moyen de rafales de signal reçues de ladite station distante (7), le procédé étant **caractérisé par** l'utilisation de l'heure d'arrivée des blocs de radiomessagerie PCH pour mesurer des décalages de crête de corrélation de synchronisation entre une horloge haute vitesse de réseau (9) et l'horloge basse vitesse (5) du terminal mobile, et dans lequel les valeurs de décalage de crête de corrélation sont utilisées pour corriger la dérive de fréquence de l'horloge basse vitesse.

**2.** Procédé selon la revendication 1, comportant les étapes consistant à; effectuer une mesure initiale pour établir la synchronisation initiale entre l'horloge basse vitesse (5) et le réseau (N), activer un mode sommeil profond et utiliser l'heure d'arrivée des blocs de radiomessagerie PCH d'une station distante (7) dans le réseau, mesurée par l'horloge basse vitesse (5), pour corriger la dérive de fréquence de l'horloge basse vitesse.

**3.** Procédé selon la revendication 1, comportant les étapes consistant à; effectuer une mesure initiale pour établir un rapport de fréquence entre l'horloge haute vitesse (3) et l'horloge basse vitesse (5) du terminal mobile, activer un mode sommeil profond et mettre à jour ledit rapport sur la base de l'heure d'arrivée des blocs de radiomessagerie PCH d'une station distante (7) dans le réseau, mesurée par l'horloge basse vitesse (5), pour corriger la dérive de fréquence de l'horloge basse vitesse.

**4.** Procédé selon la revendication 3 dans lequel la mesure initiale comporte l'étape consistant à mesurer le nombre de cycles de l'horloge haute vitesse (3) du terminal mobile dans un nombre prédéterminé de cycles de l'horloge basse vitesse (5).

5. Procédé selon l'une quelconque des revendications précédentes, dans lequel une partie du décalage de crête de corrélation est attribuée à la dérive de fréquence de l'horloge basse vitesse (5), le procédé comportant en outre les étapes consistant à effectuer la moyenne entre cette partie et un décalage de dérive temporelle, et dériver une valeur de correction pour corriger les dérives de fréquence totales.

6. Procédé selon la revendication 1, 2, 3 ou 4, comportant les étapes consistant à utiliser des différences de synchronisation entre les rafales de réseau pour mettre à jour la corrélation entre les horloges basse vitesse et haute vitesse du terminal, en effectuant la moyenne instantanée entre une fraction de la différence de synchronisation et la corrélation de fréquence.

7. Procédé selon l'une quelconque des revendications précédentes, dans lequel une mesure initiale est effectuée sur une période d'au moins 500 ms, pour établir la synchronisation initiale de l'horloge basse vitesse.

8. Procédé selon l'une quelconque des revendications précédentes, dans lequel, dans un système de téléphonie mobile, lorsqu'un terminal mobile (1) n'est pas en mesure de décoder un bloc de radiomessagerie PCH pour la corrélation de synchronisation, un mécanisme de reprise secondaire est utilisé.

9. Procédé selon l'une quelconque des revendications précédentes, dans lequel, dans un système de téléphonie mobile, lorsqu'un échec de signal en liaison descendante est détecté, un mécanisme de reprise secondaire est employé.

10. Procédé selon la revendication 8 ou la revendication 9, dans lequel le mécanisme de reprise comporte les étapes consistant à lire un canal de signalisation (SCH) et, lorsque le terminal (1) est en mesure de décoder le canal de signalisation (SCH), à mettre à jour la synchronisation de l'horloge basse vitesse (5).

11. Procédé selon la revendication 10, dans lequel lorsque le canal de signalisation (SCH) n'est pas en mesure d'être décodé, le téléphone mobile (1) lance un processus pour réacquérir une cellule et démarre en outre une mesure initiale pour établir un rapport entre son horloge haute vitesse (3) et son horloge basse vitesse (5).

12. Procédé selon l'une quelconque des revendications 1 à 11, dans lequel l'heure d'arrivée globale d'un bloc de radiomessagerie est dérivée en effectuant la moyenne d'une pluralité d'heures d'arrivée individuelles.

13. Procédé selon la revendication 12, dans lequel une moyenne est effectuée avec quatre rafales.

14. Procédé selon l'une quelconque de revendications 1 à 13, dans lequel les valeurs d'heure d'arrivée sont écrêtées avant que leur soit appliquer une correction temporelle.

15. Procédé selon l'une quelconque des revendications précédentes, dans lequel le terminal (1) est un terminal mobile d'un système de téléphonie cellulaire, l'horloge basse vitesse (5) a un taux nominal de 32 KHz et l'horloge haute vitesse (3) a un taux nominal de 13 MHz.

16. Terminal mobile (1), destiné à être utilisé dans un réseau de télécommunication (N), le terminal (1) comportant une horloge haute vitesse (3) et une horloge basse vitesse (5), et des moyens (2) pour maintenir l'horloge basse vitesse synchronisée en mesurant et en utilisant des rafales de signal reçues d'une station externe, le terminal mobile étant **caractérisé en ce que** les moyens de maintien sont agencés pour utiliser en fonctionnement l'heure d'arrivée des blocs de radiomessagerie PCH pour mesurer des décalages de crête de corrélation de synchronisation entre une horloge haute vitesse de réseau (9) et l'horloge basse vitesse (5) du terminal mobile, et dans lequel les valeurs de décalage de crête de corrélation sont utilisées pour corriger la dérive de fréquence de l'horloge basse vitesse.

FIG 1

FIG 2

10

10a

10b

t₀    t₁

ToA

ToA_previous

ToA -

FIG 3

PCH blocks

11a    11b    11c    11d    11e

1. perfectly synchronised on the delayed path

2. switch on the direct path
-> ToA = -4 bit
-> deltaT=-1 bit
-> error_drift=-0.2 bit

3. ToA=-2.8 bit
deltaT=-1 bit
error_drift=-0.4 bit

4. ToA=-1.4 bit
deltaT=-1 bit
error_drift=-0.6 bit

5. ToA=+0.2 bit
deltaT=0 bit
error_drift=-0.6 bit

...

FIG 4